# EUROPÄISCHE PATENTANMELDUNG

(11) **EP 4 501 599 A1**
(43) Veröffentlichungstag der Anmeldung: **05.02.2025**
(21) Anmeldenummer: 23188933.8
(22) Anmeldetag: 01.08.2023
(51) Int. Cl.: B29C 65/36, B29C 65/78, B29C 65/00, B65D 83/00, B29L 23/20, B29L 31/00

(54) **VERFAHREN ZUR HERSTELLUNG EINER KARTUSCHE**

(71) Anmelder: Hilti Aktiengesellschaft, 9494 Schaan (LI)
(72) Erfinder: Ayrle, Thomas, 86853 Langerringen (DE); Donner, Tobias, 82383 Hohenpeißenberg (DE); Willner, Ralf, 86874 Tussenhausen (DE); Ulrich, Nicolas, 86153 Augsburg (DE)
(74) Vertreter: Hilti Aktiengesellschaft Corporate Intellectual Property

(57) **Zusammenfassung**

Die vorliegende Erfindung betrifft ein Verfahren zur Herstellung einer Kartusche (10) für eine Auspressvorrichtung, wobei die Kartusche (10) einen nicht eigensteif ausgebildeten, länglichen Folienbeutel (18), der eine Kammer (20) zur Aufnahme einer Masse, einen eigensteif ausgeführten Einsatz (16), der in einem Endbereich des Folienbeutels (18) mit dem Folienbeutel (18) verbunden ist, und eine Abdeckfolie (14), die eine im Bereich des Einsatzes (16) vorgesehene Öffnung (22) des Folienbeutels (18) verschließt, aufweist. Das Verfahren ist durch die folgenden Schritte gekennzeichnet:
- Bereitstellen des eine Kammer (20) bildenden Folienbeutels (18) und des Einsatzes (16);
- Positionierung eines Halteelements (33) außenseitig an dem Folienbeutel (18) in einem Verbindungsbereich (29);
- Positionierung eines Presselements (43) auf einer dem Halteelement (33) abgewandten Seite des Einsatzes (16); und
- Herstellen einer Schweißverbindung zwischen dem Folienbeutel (18) und dem Einsatz (16) durch ein Zusammenwirken des Halteelements (33) mit dem Presselement (43).

## Beschreibung

Die vorliegende Erfindung betrifft ein Verfahren zur Herstellung einer Kartusche für eine Auspressvorrichtung.

Kartuschen werden vor allem für die Lagerung von Material verwendet, wie Kleber, Dichtmasse, Mörtel, Farbe oder Schmierstoffe. Zudem lässt sich das Material über die Kartuschen auf ein Objekt leicht auftragen, sofern die Kartusche in eine entsprechende Auspressvorrichtung eingesetzt ist. Mittels der Auspressvorrichtung kann das Material exakt aufgetragen werden. Beispielsweise drückt eine Stange der Auspressvorrichtung gegen einen Boden der Kartusche, wodurch das Volumen der Kartusche komprimiert wird, sodass das in der Kartusche befindliche Material aus einer Öffnung gedrückt wird. Es kann ein Aufsatz auf der Kartusche angebracht sein, um das Material kontrolliert und exakt auf das Objekt auftragen zu können.

Beispielsweise aus der EP 3 835 229 A1 ist eine Kartusche für eine Auspressvorrichtung bekannt. Die Kartusche weist einen nicht eigensteif ausgebildeten, länglichen Folienbeutel auf, der einenends mit einem eigensteif ausgeführten Einsatz verbunden ist. Der Folienbeutel ist im Bereich des Einsatzes mit einer Abdeckung verschlossen, die an dem Einsatz angebunden ist.

Die Anbindung der Abdeckung an den Einsatz ist gegebenenfalls aufwändig herzustellen.

Es ist die Aufgabe der Erfindung ein Verfahren zur Herstellung einer Kartusche zur Verfügung zu stellen, mittels dem eine Kartusche auf einfache Weise herstellbar ist.

Die Aufgabe wird gelöst durch den Gegenstand des unabhängigen Anspruchs. Vorteilhafte Ausführungsformen zu dem Gegenstand des unabhängigen Anspruchs finden sich in den abhängigen Ansprüchen.

Es wird ein Verfahren zur Herstellung einer Kartusche für eine Auspressvorrichtung vorgeschlagen, wobei die Kartusche einen nicht eigensteif ausgebildeten, länglichen Folienbeutel, der eine Kammer zur Aufnahme einer Masse, einen eigensteif ausgeführten Einsatz, der in einem Endbereich des Folienbeutels mit dem Folienbeutel verbunden ist, und eine Abdeckfolie, die eine im Bereich des Einsatzes vorgesehene Öffnung des Folienbeutels verschließt, aufweist.

Das erfindungsgemäße Verfahren ist gekennzeichnet durch die folgenden Schritte:
- Bereitstellen des eine Kammer bildenden Folienbeutels und des Einsatzes, wobei der Einsatz in an dem Folienbeutel angeordneter Position eine sich in Richtung der Öffnung des Folienbeutels aufweitende Außenfläche aufweist;
- Positionierung eines Halteelements außenseitig an dem Folienbeutel in einem Verbindungsbereich, in dem der Folienbeutels mit dem Einsatz verbunden wird, wobei das Halteelement eine in mit dem Folienbeutel zusammenwirkender Position sich in Richtung der Öffnung aufweitende Innenfläche aufweist;
- Positionierung eines Presselements auf einer dem Halteelement abgewandten Seite des Einsatzes; und
- Herstellen einer Schweißverbindung zwischen dem Folienbeutel und dem Einsatz durch ein Zusammenwirken des Halteelements mit dem Presselement.

Mittels des erfindungsgemäßen Verfahrens ist auf einfache Weise eine Kartusche herstellbar, da eine Anbindung des Folienbeutels an den Einsatz sehr einfach durchführbar ist. Darüber hinaus ist durch die erfindungsgemäße Formgebung des Einsatzes und des Halteelements eine automatisierte Zentrierung des Einsatzes gegenüber dem Folienbeutel einfach erzielbar. Darüber hinaus wird hierdurch ein umfangsseitig gleichmäßiger Schweißdruck im gesamten Verbindungsbereich erzielt, so dass zudem eine besonders stabile und sichere Anbindung des Einsatzes an den Folienbeutel erzielt werden kann.

Unter einem Folienbeutel wird im Rahmen dieser Anmeldung sowohl ein in einem unteren Endbereich beispielsweise mit einem Bodenteil oder anderweitig verschlossener Folienschlauch als auch ein ohne Bodenteil vorliegender Folienschlauch verstanden.

Bei einer vorteilhaften Ausführungsform eines Verfahrens nach der Erfindung fungiert das Presselement als Schweißwerkzeug. Dies hat den Vorteil, dass das Schweißwerkzeug besonders einfach und kostengünstig einteilig ausgeführt sein kann und eine exakte Anpassung an die Geometrie des Einsatzes nicht erforderlich ist. Darüber hinaus nimmt die Schweißenergie bei einer derartigen Ausführung mit zunehmender Entfernung vom Schweißwerkzeug kontinuierlich ab, so dass das Entstehen einer unerwünschten Störzone in einem unteren Randbereich der Verbindungszone sicher verhindert ist. Ein weiterer Vorteil eines derartigen Verfahrens ist die einfache Zuführbarkeit der zu verschweißenden Elemente, also des Folienbeutels und des Einsatzes, da diese in einfachen Haltern zugeführt werden können, die keinerlei Anschlüsse benötigen. Beispielsweise kann ein Rundschalttisch mit zahlreichen derartigen Haltern vorgesehen sein.

Bei einer alternativen Ausführungsform eines Verfahrens nach der Erfindung fungiert das Halteelement als Schweißwerkzeug. Hierbei wird die Schweißenergie in einer zumindest teilweise radialen Richtung in den Verbindungsbereich eingebracht. Dies ist insbesondere vorteilhaft, wenn eine in Längsrichtung des Folienbeutels lange Schweißnaht erzielt werden soll oder, wenn eine Entfernung von einem Ende des Einsatzes zum Verbindungsbereich sehr groß ist um eine effiziente Energiezufuhr von dem Presselement zu gewährleisten.

Bei einer vorteilhaften Ausführungsform eines Verfahrens nach der Erfindung wird die Schweißverbindung mittels eines Pressschweißverfahrens, insbesondere eines Induktionsschweißverfahrens, hergestellt.

Eine günstige Anbindung des Einsatzes an den Folienbeutel im gesamten Verbindungsbereich ist erzielbar, wenn der Einsatz und das Halteelement zumindest teilweise im Verbindungsbereich, insbesondere im gesamten Verbindungsbereich im Wesentlichen komplementär zueinander ausgeführt sind.

Es hat sich als besonders vorteilhaft herausgestellt, wenn der Einsatz im Verbindungsbereich außenseitig und/oder das Halteelement im Verbindungsbereich innenseitig konusförmig ausgeführt ist bzw. sind und gegenüber der Längsrichtung des Folienbeutels einen Winkel zwischen 3° und 20°, vorzugsweise zwischen 5° und 15°, aufweist bzw. aufweisen.

Weiterhin hat es sich als vorteilhaft herausgestellt, wenn die Innenfläche des Halteelements gegenüber der Längsrichtung des Folienbeutels im Verbindungsbereich einen Winkel aufweist, der im Wesentlichen einem Winkel der Außenfläche des Einsatzes gegenüber der Längsrichtung des Folienbeutels im Verbindungsbereich entspricht.

Um zumindest in einem umlaufenden Längsbereich des Folienbeutels eine besonders stabile Verbindung zwischen dem Einsatz und dem Folienbeutel zu erzielen hat es sich als vorteilhaft erwiesen, wenn ein Winkel der Innenfläche des Halteelements gegenüber der Längsrichtung des Folienbeutels im Verbindungsbereich sich von einem Winkel der Außenfläche des Einsatzes gegenüber der Längsrichtung des Folienbeutels im Verbindungsbereich um einen Wert von etwa 2° unterscheidet. Dieser Winkelunterschied kann sich bei alternativen Ausführungen auch von 2° unterscheiden und größer oder kleiner sein.

Eine besonders stabile Anbindung zwischen dem Einsatz und dem Folienbeutel ist erzielbar, wenn das Halteelement im Verbindungsbereich innenseitig und/oder der Einsatz im Verbindungsbereich außenseitig eine ballige Form aufweist bzw. aufweisen. Hierdurch kann in einem gewünschten Längsbereich des Verbindungsbereich eine sehr stabile und belastbare Verbindung zwischen dem Einsatz und dem Folienbeutel erzielt werden. Insbesondere ist es hierbei vorgesehen, dass der Einsatz außenseitig konusförmig und das Halteelement innenseitig ballig oder der Einsatz außenseitig ballig und das Halteelement innenseitig konusförmig ausgeführt ist.

Um eine besonders stabile Verbindung zwischen dem Einsatz und dem Folienbeutel zu erzielen hat es sich als vorteilhaft herausgestellt, wenn das Halteelements im Verbindungsbereich innenseitig und/oder der Einsatz im Verbindungsbereich außenseitig eine Rauhigkeit größer einem definierten Grenzwert aufweist bzw. aufweisen.

Zu diesem Zweck kann es alternativ oder zusätzlich hierzu auch vorgesehen sein, dass das Halteelement im Verbindungsbereich innenseitig und/oder der Einsatz im Verbindungsbereich außenseitig eine Oberflächenstruktur aufweist. Die Oberflächenstruktur kann dabei grundsätzlich vielfältig ausgeführt sein und beispielsweise noppenartig ausgeführt sein.

Der Folienbeutel und/oder der Einsatz und/oder das Halteelement weisen bei einer vorteilhaften Ausführungsform eines Verfahrens nach der Erfindung einen kreisförmigen, ovalen, quadratischen, rechteckigen trapezförmigen, vieleckigen oder dergleichen Querschnitt auf.

Nach einer Herstellung der Verbindung zwischen dem Folienbeutel mit dem Einsatz können diese nach einer Befüllung mit einer Masse mit einer Abdeckung verschlossen werden und in Wirkverbindung mit einem Kopfteil gebracht werden. Es kann vorgesehen sein, dass mehrere Folienbeutel mit einem Kopfteil wirkverbunden werden, wobei insbesondere unterschiedliche Massen in den Folienbeuteln angeordnet sein können.

Die in der Kartusche befindlichen Massen können eine chemische Masse oder eine Flüssigkeit sein, beispielsweise Komponenten eines Zweikomponenten-Gemisches.

Es lassen sich so unter anderem Dichtmassen, Mehrkomponentenmörtel, Mehrkomponentenbeschichtungsmassen, Mehrkomponentenfarben, Mehrkomponentenschaumvorprodukte, Mehrkomponentenklebstoffe, Mehrkomponentendichtmassen und Mehrkomponentenschmierstoffe in den entsprechenden Kartuschen bzw. Folienbeuteln lagern.

Beispielsweise kann in einem Folienbeutel ein Harz, beispielsweise ein Epoxidharz, und in einem weiteren Folienbeutel ein Härter für einen Zweikomponenten-Klebstoff gelagert sein.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: eine Seitenansicht einer Kartusche mit zwei Folienbeuteln;
- Fig. 2: einen Längsschnitt durch die Kartusche gemäß Fig. 1 in einer Explosionsdarstellung;
- Fig. 3: eine Schnittdarstellung eines Bereichs der Kartusche gemäß Fig. 1 und Fig. 2 während eines Herstellungsverfahrens;
- Fig. 4: eine Detailansicht der Kartusche gemäß Fig. 3 in vergrößerter Ansicht; und
- Fig. 5: eine Fig. 3 entsprechende Schnittdarstellung der Kartusche gemäß Fig. 1 und Fig. 2 während eines alternativen Herstellungsverfahrens.

### Ausführungsbeispiele:

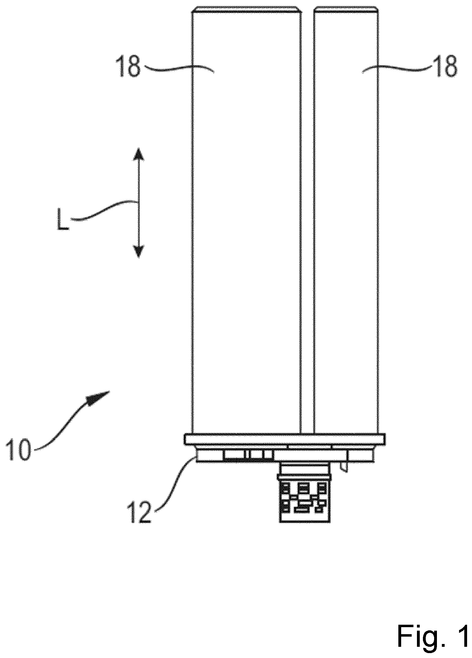

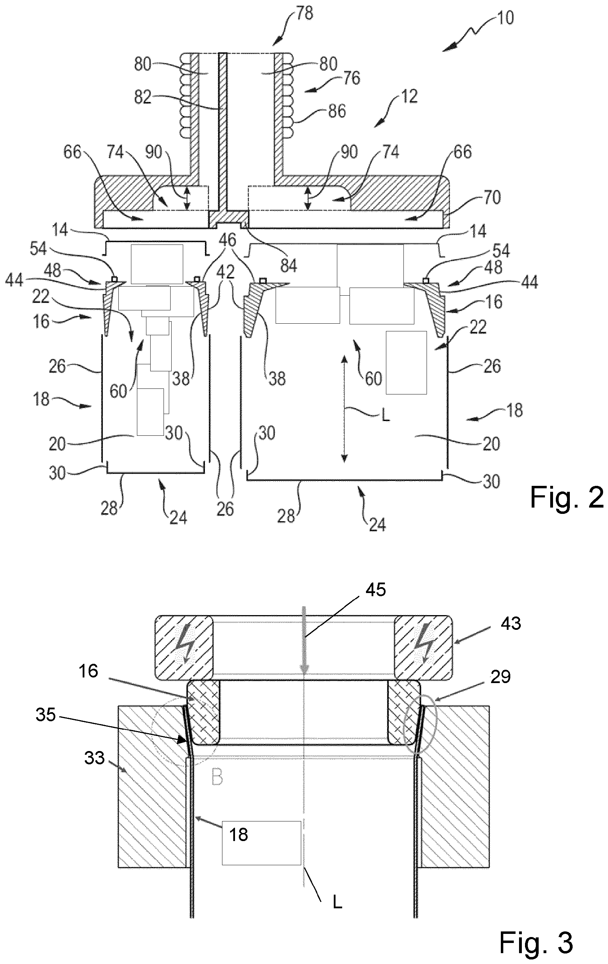

Fig. 1 und Fig. 2 zeigen eine Kartusche 10 in einer Seitenansicht bzw. in einer Explosionsdarstellung in einem Längsschnitt.

Die Kartusche 10 umfasst ein Kopfteil 12, zwei Abdeckungen 14, zwei Einsätze 16 und zwei Folienbeutel 18.

Die Folienbeutel 18 sind nicht eigensteif ausgeführt und weisen jeweils eine zylindrische und im Wesentlichen längliche Form mit einer Querschnittsfläche 19 auf. Die Folienbeutel 18 begrenzen jeweils eine Kammer 20 und weisen eine Öffnung 22 auf, wobei die Kammer 20 von den Folienbeutels 18 insbesondere dichtend verschließbar ist.

In der gezeigten Ausgestaltung ist der Folienbeutel 18 durch ein Bodenteil 24 und einen Folienschlauch 26 gebildet. Das Bodenteil 24 weist eine Grundfläche 28 und einen um die Grundfläche 28 umlaufenden Kragen 30 auf. Der Folienschlauch 26 ist außenseitig an dem Kragen 30 durch Verschweißen oder Kleben befestigt. Grundsätzlich kann der Folienschlauch 26 auch innenseitig an dem Kragen 30 durch Verschweißen oder Kleben befestigt sein.

Der Folienschlauch 26 kann beispielsweise aus einer Folie durch Verkleben oder Verschweißen von Randbereichen hergestellt sein. Es kann auch vorgesehen sein einen bereits vorgefertigten Folienschlauch bzw. einen vorgefertigten Folienbeutel zu verwenden.

Die Grundfläche 28 ist beispielsweise kreisförmig, sodass die Kammer 20 zylinderförmig mit einer kreisförmigen Querschnittsfläche 19 ausgestaltet ist. Prinzipiell ist jedoch jede beliebige Form der Grundfläche 28 denkbar, beispielsweise rechteckig bzw. polygonal.

Der Einsatz 16 ist jeweils eigensteif ausgebildet und innenseitig durch die Öffnung 22 zumindest teilweise in die entsprechende Kammer 20 eines zugeordneten Folienbeutels 18 eingesetzt. Der Einsatz 16 weist jeweils eine Stufe 48 mit zwei nach außen gerichteten Aussenflächen 42 und 44 auf, wobei die Aussenfläche 42 zum Zusammenwirken mit dem Folienschlauch 26 und die Aussenfläche 44 zum Zusammenwirken mit der Abdeckung 14 vorgesehen sind.

Der Einsatz 16 ist im Wesentlichen ringförmig ausgeführt, wobei der Einsatz 16 mit dem im Wesentlichen zylinderförmigen Folienschlauch gekoppelt ist. Eine Anbindung des Folienschlauchs 26 an den Einsatz 16 wird später näher erläutert.

Auf einer dem Kopfteil 12 zugewandten und somit nach oben gewandten Fläche 46 ist ein Materialfortsatz 54 vorgesehen, der im Wesentlichen senkrecht von der zur Horizontalen H parallelen Fläche 46 absteht, also in Längsrichtung L. Der Materialfortsatz 54 hat eine vordefinierte Höhe und dient zur Anbindung der Abdeckung 14 an den Einsatz 16 in einem Schweißverfahren.

Die der Kammer 20 zugewandte Innenseite 38 des Einsatzes 16 umschließt einen Durchgang 60, der in Richtung des Kopfteils 12 konisch zulaufend ist.

Zwischen dem Kopfteil 12 und dem Einsatz 16 ist die Abdeckung 14 vorgesehen, wie aus Fig. 2 hervorgeht. Die Abdeckung 14 liegt im zusammengebauten Zustand der Kartusche 10 in radial äußeren Bereichen an der stufenförmigen Erhebung 48 im Wesentlichen an den beiden Flächen 44 und 46 an. Die Abdeckung 14 ist beispielsweise durch Schweißen oder Kleben mit dem Einsatz 16 verbunden und verschließt den Durchgang 60. Dementsprechend verschließt die Abdeckung 14 die Kammer 20, so dass die Kammer 20 in montiertem Zustand der Abdeckung 14 vorzugsweise vollständig abgedichtet ist.

Das Kopfteil 12 weist vorliegend, wie in Fig. 2 ersichtlich ist, zwei Aufnahmen 66 auf, die in montiertem Zustand mit den Einsätzen 16 und der Abdeckung 14 zusammenwirken. Das Kopfteil 12 weist eine jedem Folienbeutel 18 zugeordnete umlaufende Innenfläche 70 auf, die mit der jeweiligen Abdeckung 14 in montiertem Zustand in Anlage ist.

Das Kopfteil 12 weist weiterhin einen Austrittsstutzen 76, mit einer Austrittsöffnung 78 und einem Austrittskanal 80, auf. Die Austrittsöffnung 78 steht durch den Austrittskanal 80 mit einem Ausbreitungsraum 74 und der Aufnahme 66 in Fluidverbindung. Der Ausbreitungsraum 74 weist eine Höhe 90 auf.

Der in Fig. 2 dargestellte Austrittsstutzen 76 weist zwei Austrittskanäle 80 auf, die mit der jeweiligen Aufnahme 66 in Fluidverbindung stehen und durch eine Trennwand 82 voneinander getrennt sind, die sich von einem die Aufnahmen 66 trennenden Verbindungssteg 84 bis zu der Austrittsöffnung 78 erstreckt.

Es kann vorgesehen sein, dass die beiden Austrittskanäle 80, wie in Fig. 2 dargestellt, einen unterschiedlichen Querschnitt haben, insbesondere einen unterschiedlichen Durchmesser, um ein Mischungsverhältnis der Massen einzustellen, wie nachfolgend noch erläutert wird.

Der Austrittsstutzen 76 weist ferner ein Gewinde 86 auf, durch das ein nicht ersichtlicher Aufsatz an der Austrittsöffnung 78 des Kopfteils 12 befestigt werden kann. Dieser Aufsatz kann Teil einer Auspressvorrichtung sein, in die die Kartusche 10 eingesetzt bzw. eingelegt werden kann.

Nach dem Öffnen des jeweiligen Folienbeutels 18 kann die darin befindliche Masse durch den Durchgang 60 des Einsatzes 16 und die entstandene Öffnung aus der Kammer 20 in den Austrittskanal 80 fließen kann. Die Masse kann somit aus dem Kopfteil 12 heraus durch die Austrittsöffnung 78 fließen und beispielsweise auf einem Objekt aufgetragen werden.

In den dargestellten Ausführungsformen umfasst die Kartusche 10 zwei Kammern 20 und eine entsprechende Anzahl an Abdeckungen 14, Einsätzen 16, Folienbeuteln 18, Aufnahmen 66 und Austrittskanälen 80. Im Allgemeinen ist eine beliebige Anzahl der genannten Bauteile möglich.

Im Folgenden wird ein Herstellungsverfahren der Kartusche 10 näher erläutert.

Nach einer Herstellung des Folienschlauchs 26 und vorzugsweise der Anbindung des Bodenteils 24 an dem Folienschlauch 26 wird der Einsatz 16 an den Folienschlauch 26 angebunden. Hierbei wird ein Teil einer Innenfläche 27 des Folienschlauchs 26 in einem Verbindungsbereich 29 mit einem Teil der Außenfläche 42 des Einsatzes 16 in einem Schweißverfahren verbunden.

Hierbei wird zunächst ein Halteelement 33 in einem oberen, d. h. dem Bodenteil 24 abgewandten Endbereich 35 des Folienschlauchs 26 angeordnet. Das Halteelement 33 ist in zum Verschweißen vorgesehener Position außenseitig des oberen Endbereichs 35 des Folienschlauchs 26 angeordnet und stützt diesen entgegen einer Bewegung nach außen.

Das Halteelement 33 ist dabei ringförmig ausgeführt, wobei sich ein Innendurchmesser des Halteelements 33 in Richtung des oberen Endbereichs 35 des Folienschlauchs 26 aufweitet. Das Halteelement 33 ist vorliegend innenseitig konusförmig ausgeführt und weist hier einen in Richtung des oberen Endbereichs 35 des Folienschlauchs 26 konstant zunehmenden Durchmesser auf, so dass eine Innenfläche 37 des Halteelements 33 in der Schnittdarstellung gemäß Fig. 3 im Verbindungsbereich 29 einen Winkel 39 mit der Längsrichtung L einschließt, der zwischen 3° und 20°, vorzugsweise zwischen 5° und 15°, und hier etwa 10° beträgt.

Der Einsatz 16 ist im Verbindungsbereich 29 außenseitig konusförmig ausgeführt, wobei die Außenfläche 42 des Einsatzes 16 mit der Längsrichtung L einen Winkel 41 einschließt, der zwischen 3° und 20°, vorzugsweise zwischen 5° und 15°, und hier etwa 10° beträgt.

Zur Erzeugung einer Schweißverbindung zwischen dem Einsatz 16 und dem Folienschlauch 26 im Verbindungsbereich 29 ist weiterhin ein Presselement 43 vorgesehen, welches vorliegend ebenfalls ringförmig ausgeführt ist und zur Aufbringung einer Schweißkraft 45 in Längsrichtung L von oben auf den Einsatz 16 ausgeführt ist. Das Presselement 43 bzw. Schweißelement ist zur Durchführung eines Induktionsschweißverfahrens ausgeführt, insbesondere eines Hochfrequenz Induktionsschweißverfahrens.

Durch die Aufbringung der Schweißkraft 45 in Längsrichtung L durch das Presselement 43 wird eine Schweißkraft in dem Verbindungsbereich 29 induziert, die mit einem dem Winkel 39 bzw. 41 entsprechenden Winkel gegenüber einer Querrichtung des Folienschlauchs 26 geneigt ist. Der Winkel 39 und der Winkel 41 sind vorliegend im Wesentlichen identisch ausgeführt, so dass eine Schweißverbindung in einem in Längsrichtung L besonders großen Verbindungsbereich 29 erzeugt wird.

Die konusförmige Ausführung sowohl des Halteelements 33 als auch des Einsatzes 16 führt zu einer automatisierten Zentrierung der Elemente zueinander, so dass eine umfangsseitig gleichmäßige Krafteinleitung mit dem Ergebnis einer gleichmäßigen Schweißverbindung erzielt wird.

Um in einem bestimmten Bereich eine sehr sichere Verbindung zwischen dem Folienschlauch 26 und dem Einsatz 16 erzielen zu können, kann es vorgesehen sein, dass sich der 39 und der Winkel 41 um einen Wert von beispielsweise ± 2° unterscheiden.

Alternativ oder zusätzlich hierzu kann es vorgesehen sein, dass die Innenfläche 37 des Halteelements 33 und/oder die Außenfläche 42 des Einsatzes 16 im Verbindungsbereich 29 eine Oberflächenstruktur beispielsweise in Form von Noppen aufweist bzw. aufweisen. Alternativ oder zusätzlich hierzu kann das Halteelement 33 im Verbindungsbereich 29 innenseitig und/oder der Einsatz 16 im Verbindungsbereich 29 außenseitig eine Rauhigkeit größer einem definierten Grenzwert aufweisen, um hierdurch verbesserte Verbindungseigenschaften zu erzielen.

Um eine besonders feste Verbindung zwischen dem Folienschlauch 26 und dem Einsatz 16 im Verbindungsbereich 29 zu erzielen, kann es auch vorgesehen sein, dass entweder der Einsatz 16 außenseitig ballig oder das Halteelement 33 innenseitig ballig ausgeführt sind. Es kann auch vorgesehen sein, dass sowohl das Halteelement 33 innenseitig als auch der Einsatz 16 außenseitig ballig ausgeführt sind.

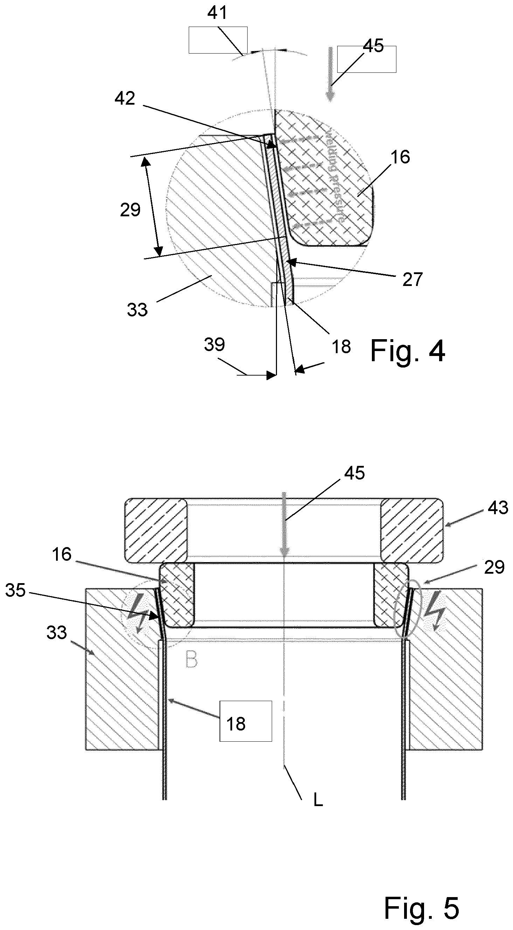

Fig. 5 zeigt ein Fig. 3 ähnliches Verfahren zur Anbindung des Folienschlauchs 26 an dem Einsatz 16, wobei sich das Verfahren dadurch unterscheidet, dass das Halteelement 33 integriert mit einem Schweißwerkzeug ausgeführt ist und die Schweißenergie im Wesentlichen radial in den Verbindungsbereich 29 eingeführt wird.

Wenn in der obigen Beschreibung vom Folienschlauch 26 gesprochen wird, kann es sich bei der Anbindung des Einsatzes entweder um den Folienschlauch 26 alleine oder um den bereits mit dem Bodenteil 24 verbundenen Folienschlauch 26 also den Folienbeutel 18 handeln.

## Patentansprüche

1. Verfahren zur Herstellung einer Kartusche (10) für eine Auspressvorrichtung, wobei die Kartusche (10) einen nicht eigensteif ausgebildeten, länglichen Folienbeutel (18), der eine Kammer (20) zur Aufnahme einer Masse, einen eigensteif ausgeführten Einsatz (16), der in einem Endbereich des Folienbeutels (18) mit dem Folienbeutel (18) verbunden ist, und eine Abdeckfolie (14), die eine im Bereich des Einsatzes (16) vorgesehene Öffnung (22) des Folienbeutels (18) verschließt, aufweist, **gekennzeichnet durch** die folgenden Schritte:
- Bereitstellen des eine Kammer (20) bildenden Folienbeutels (18) und des Einsatzes (16), wobei der Einsatz (16) in an dem Folienbeutel (18) angeordneter Position eine sich in Richtung der Öffnung (22) des Folienbeutels (18) aufweitende Außenfläche (42) aufweist;
- Positionierung eines Halteelements (33) außenseitig an dem Folienbeutel (18) in einem Verbindungsbereich (29), in dem der Folienbeutels (18) mit dem Einsatz (16) verbunden wird, wobei das Halteelement (33) eine in mit dem Folienbeutel (18) zusammenwirkender Position sich in Richtung der Öffnung (22) aufweitende Innenfläche (37) aufweist;
- Positionierung eines Presselements (43) auf einer dem Halteelement (33) abgewandten Seite des Einsatzes (16); und
- Herstellen einer Schweißverbindung zwischen dem Folienbeutel (18) und dem Einsatz (16) durch ein Zusammenwirken des Halteelements (33) mit dem Presselement (43).

2. Verfahren nach Anspruch 1, **dadurch gekennzeichnet, dass** das Presselement (43) als Schweißwerkzeug fungiert.

3. Verfahren nach Anspruch 1, **dadurch gekennzeichnet, dass** das Halteelement (33) als Schweißwerkzeug fungiert.

4. Verfahren nach einem der vorhergehenden Ansprüche, **dadurch gekennzeichnet, dass** die Schweißverbindung mittels eines Pressschweißverfahrens, insbesondere eines Induktionsschweißverfahrens, hergestellt wird.

5. Verfahren nach einem der vorherigen Ansprüche, **dadurch gekennzeichnet, dass** der Einsatz (16) und das Halteelement (33) zumindest teilweise im Verbindungsbereich (29), insbesondere im gesamten Verbindungsbereich (29) im Wesentlichen komplementär zueinander ausgeführt sind.

6. Verfahren nach einem der vorherigen Ansprüche, **dadurch gekennzeichnet, dass** der Einsatz (16) im Verbindungsbereich (29) außenseitig und/oder das Halteelement (33) im Verbindungsbereich (29) innenseitig konusförmig ausgeführt ist bzw. sind und gegenüber der Längsrichtung (L) des Folienbeutels (18) einen Winkel (39, 41) zwischen 3° und 20°, vorzugsweise zwischen 5° und 15°, aufweist bzw. aufweisen.

7. Verfahren nach einem der vorherigen Ansprüche, **dadurch gekennzeichnet, dass** die Innenfläche (37) des Halteelements (33) gegenüber der Längsrichtung (L) des Folienbeutels (18) im Verbindungsbereich (29) einen Winkel (39) aufweist, der im Wesentlichen einem Winkel (41) der Außenfläche (42) des Einsatzes (16) gegenüber der Längsrichtung (L) des Folienbeutels (18) im Verbindungsbereich (29) entspricht.

8. Verfahren nach einem der vorherigen Ansprüche, **dadurch gekennzeichnet, dass** ein Winkel (39) der Innenfläche (37) des Halteelements (33) gegenüber der Längsrichtung (L) des Folienbeutels (18) im Verbindungsbereich (29) sich von einem Winkel (41) der Außenfläche (42) des Einsatzes (16) gegenüber der Längsrichtung (L) des Folienbeutels (18) im Verbindungsbereich (29) um einen Wert von etwa 2° unterscheidet.

9. Verfahren nach einem der vorherigen Ansprüche, **dadurch gekennzeichnet, dass** das Halteelement (33) im Verbindungsbereich (29) innenseitig und/oder der Einsatz (16) im Verbindungsbereich (29) außenseitig eine ballige Form aufweist bzw. aufweisen.

10. Verfahren nach einem der vorherigen Ansprüche, **dadurch gekennzeichnet, dass** das Halteelements (33) im Verbindungsbereich (29) innenseitig und/oder der Einsatz (16) im Verbindungsbereich (29) außenseitig eine Rauhigkeit größer einem definierten Grenzwert aufweist bzw. aufweisen.

11. Verfahren nach einem der vorherigen Ansprüche, **dadurch gekennzeichnet, dass** das Halteelement (33) im Verbindungsbereich (29) innenseitig und/oder der Einsatz (16) im Verbindungsbereich (29) außenseitig eine Oberflächenstruktur aufweist.

12. Verfahren nach einem der vorherigen Ansprüche, **dadurch gekennzeichnet, dass** der Folienbeutel (18) und/oder der Einsatz (16) und/oder das Halteelement (33) einen kreisförmigen, ovalen, quadratischen, rechteckigen trapezförmigen, vieleckigen Querschnitt aufweisen.
